# EUROPÄISCHE PATENTSCHRIFT

(11) **EP 1 798 449 B1**
(45) Veröffentlichungstag und Bekanntmachung des Hinweises auf die Patenterteilung: **24.03.2010**
(21) Anmeldenummer: 06024504.0
(22) Anmeldetag: 27.11.2006
(51) Int. Cl.: F16H 61/12, F16H 61/32

(54) **Verfahren und Vorrichtung zum Schalten von Gängen eines automatischen Schaltgetriebes**
Method and device for shifting gears of an automatic transmission
Procédé et dispositif de passage de vitesses d'une transmission automatique

(30) Priorität: 14.12.2005 DE 102005059621
(43) Veröffentlichungstag der Anmeldung: 20.06.2007
(73) Patentinhaber: LuK Lamellen und Kupplungsbau Beteiligungs KG, 77815 Bühl (DE)
(72) Erfinder: Lein, Lars, 3613 Kongsberg (NO); Royland, Jan, Gunnar, 4519 Holum (NO); Gjerpe, Ole, Andre, 3610 Kongsberg (NO); Svenkerud, Christer, 3611 Kongsberg (NO)

(56) Entgegenhaltungen:
- EP-A- 1 729 041
- DE-A1- 10 310 831
- DE-A1- 10 316 442

## Beschreibung

Die Erfindung betrifft ein Verfahren und eine Vorrichtung zum Schalten von Gängen eines automatischen Schaltgetriebes.

Automatisierte oder automatische Schaltgetriebe enthalten im Allgemeinen einen Schaltmechanismus mit einer mit einem Schaltfinger versehenen Schaltwelle. Die Schaltwelle ist mittels eines Wählaktors und eines Schaltaktors derart bewegbar, dass sich der Schaltfinger längs einer Wählgasse in unterschiedliche Wählpositionen bewegen lässt, aus denen heraus der Schaltfinger mit Hilfe eines Schaltaktors in im Allgemeinen senkrecht zur Wählgasse gerichtete Schaltgassen bewegbar ist. Beim Bewegen längs einer Schaltgasse nimmt der Schaltfinger eine Schaltschiene mit, mit der ein Gang einlegbar ist. Dabei ist die Schaltschiene im Allgemeinen aus einer Mittelposition in die eine Richtung zum Schalten eines Ganges und in die andere Richtung zum Schalten eines anderen Ganges bewegbar.

Ein bei konventionellen Schaltmechanismen auftretendes Problem besteht darin, dass erst nach Einlegen eines Ganges, beispielsweise dadurch, dass die Schaltschiene gegen einen Anschlag fährt, festgestellt werden kann, welcher Gang tatsächlich eingelegt ist. Bei einem Fehler in der Steuerung des Wählaktors oder in dessen Verbindung mit dem Schaltfinger kann es vorkommen, dass sich der Schaltfinger in einer nicht beabsichtigten Wählposition befindet, aus der heraus er dann in eine unbeabsichtigte Schaltgasse bewegt wird, so dass ein unbeabsichtigter Gang eingelegt wird. Dies kann beim Herunterschalten zu einem Überdrehen des Motors, bei einem Hochschalten zum Abwürgen oder bei fehlerhaftem Einlegen des Rückwärtsgangs sogar zu einer unbeabsichtigten Fahrtrichtung führen. Die EP 1 729 041 zeigt einer Verfahren und eine Vorrichtung gemäß dem Oberbegriff der Ansprüche 1 und 5.

Der Erfindung liegt die Aufgabe zugrunde, die Schaltsicherheit beim Schalten von Gängen eines automatischen Schaltgetriebes der beschriebenen Art zu verbessern.

Diese Aufgabe wird mit den Merkmalen des Anspruchs 1 gelöst.

Die Unteransprüche 2 bis 4 sind auf vorteilhafte Durchführungsformen des erfindungsgemäßen Verfahrens gerichtet.

Der Anspruch 5 kennzeichnet eine Vorrichtung zum Durchführen des erfindungsgemäßen Verfahrens.

Mit der Erfindung wird ein Verfahren zum Schalten von Gängen eines automatischen Schaltgetriebes gemäß dem Anspruch 1 geschaffen.

Vorteilhafterweise wird der Schaltfinger nach dem Einlegen eines Ganges in die Wählgasse zurückbewegt, ohne dass der eingelegte Gang ausgelegt wird.

Bei einer weiteren vorteilhaften Durchführungsform des Verfahrens wird der Wählaktor zum Verifizieren aktiviert, wenn der Schaltfinger bei seiner Bewegung längs einer Schaltgasse eine Synchronposition zum Synchronisieren des jeweiligen Ganges erreicht.

Der Schaltfinger kann nach dem Einlegen eines Ganges in die Wählgasse bewegt werden und zum Verifizieren in die Schaltgasse eines noch eingelegten Ganges bewegt werden.

Eine Vorrichtung zum Schalten von Gängen eines automatischen Schaltgetriebes enthält einen Wählaktor, einen Schaltaktor, eine mit wenigstens einem Schaltfinger und einem Auslegelement versehene Schaltwelle und wenigstens zwei Schaltschienen, wobei die Schaltwelle von dem Wählaktor und dem Schaltaktor derart beweglich ist, dass sich der Schaltfinger längs einer Wählgasse in den Schaltschienen zugeordnete Wählpositionen bewegt ist, von denen aus er sich in eine der Schaltgassen bewegt, der Schaltfinger beim Bewegen aus einer Wählposition längs einer Schaltgasse in deren Endbereich die zugeordnete Schaltschiene zum Einlegen eines Gangs bewegt und das Auslegeelement beim Einlegen des Gangs eine andere Schaltschiene derart bewegt, dass ein dieser zugeordneter Gang ausgelegt wird, wenigstens einen Sensor zum Erfassen der Stellung des Schaltfingers in Wählrichtung und eine elektronische Steuereinrichtung zum Steuern des Wählaktors und des Schaltaktors, wobei die elektronische Steuereinrichtung den Wählaktor und den Schaltaktor entsprechend einem der vorgenannten Verfahren steuert.

Vorteilhaft ist die erfindungsgemäße Vorrichtung in einem Parallelschaltgetriebe vorgesehen.

Mit der Erfindung wird eine hohe Schaltsicherheit erreicht, da vor dem Einlegen eines neuen Ganges verifiziert werden kann, ob sich der Schaltfinger tatsächlich in der beabsichtigten Wählgasse befindet. Diese Verifizierung kann rasch und insbesondere bei einem Parallelschaltgetriebe innerhalb von Wartezeiten erfolgen, so dass erforderliche Schaltzeiten nicht oder kaum verlängert werden.

Die Erfindung wird im Folgenden anhand schematischer Zeichnungen beispielsweise und mit weiteren Einzelheiten erläutert.

In den Figuren stellen dar:
- Figur 1: ein vereinfachtes Blockschaltbild einer Getriebesteuerung;
- Figur 2: eine perspektivische Ansicht eines Teils einer Schaltvorrichtung mit Active Interlock für ein Parallelschaltgetriebe;
- Figur 3: Aufsichten auf die Anordnung gemäß Figur 2 in verschiedenen Schaltzuständen;
- Figur 4: Aufsichten auf einen Teil der Anordnung gemäß Figur 2;
- Figuren 5 und 6: Diagramme von Schaltabläufen zur Erläuterung des erfindungsgemäßen Verfahrens

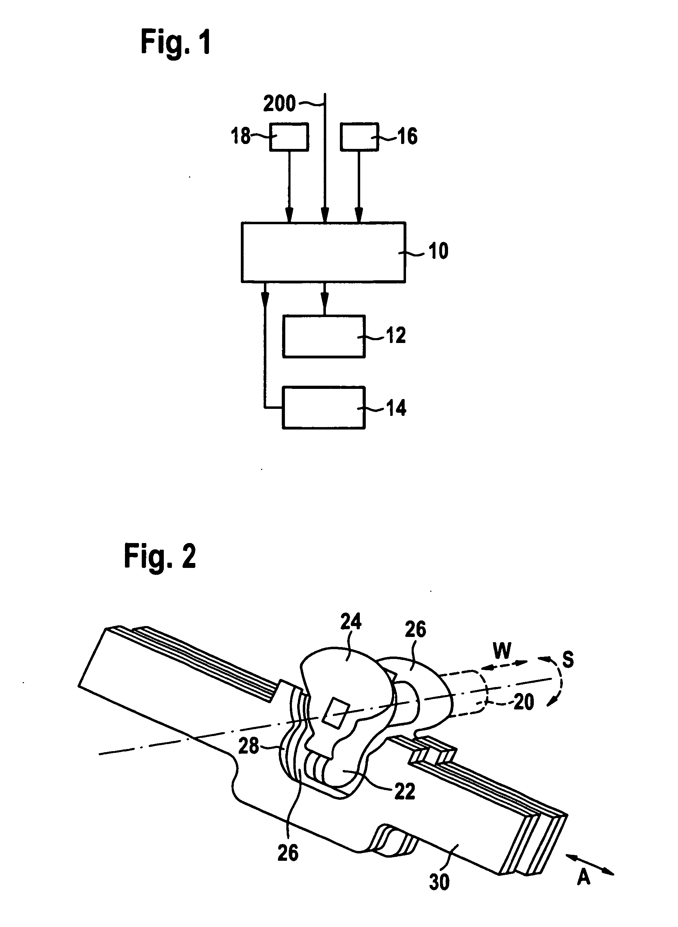

Gemäß Figur 1 enthält eine Vorrichtung zum Steuern eines automatischen Schaltgetriebes ein elektronisches Steuergerät 10, dessen Ausgänge mit einem Wählaktor 12 und einem Schaltaktor 14 verbunden sind. Eingänge des Steuergerätes 10 sind mit Wegsensoren 16 und 18 sowie mit weiteren, pauschal mit 200 bezeichneten Sensoren, beispielsweise für die Stellung eines Fahrpedals, Betriebsparameter eines Antriebsmotors, die Stellung eines Wählhebels usw. verbunden. Mit den Wegsensoren 16 und 18 kann die Stellung eines oder mehrerer Glieder in der Betätigung des Schaltgetriebes erfasst werden, wie weiter unten noch erläutert werden wird.

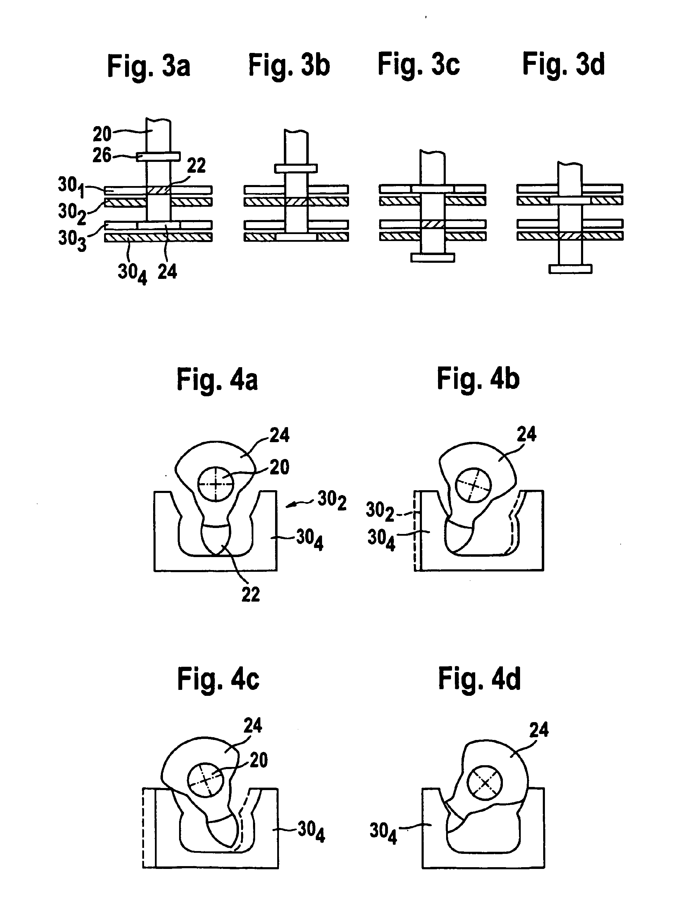

Figur 2 zeigt wesentliche Teile einer Gangschaltvorrichtung in perspektivischer Darstellung. Figur 3 zeigt eine Aufsicht auf die Anordnung gemäß Figur 2. Dargestellt ist eine Schaltvorrichtung mit einem Active Interlock Mechanismus, der ermöglicht, dass ein Schaltfinger aus seiner einen Gang einlegenden Stellung in die Neutralstellung zurückbewegt wird und der eingelegte Gang ausgelegt wird, bevor ein neuer Gang eingelegt wird.

Gemäß den Figuren ist eine Schaltwelle 20 von dem Wählaktor 12 in Richtung der strichpunktierten Achse, d.h. in Richtung des Doppelpfeils W für einen Wählvorgang hin und her beweglich. Mittels des Schaltaktors 14 ist die Schaltwelle 20 um ihre Achse in Richtung des Doppelpfeils S zum Ein- und Auslegen von Gängen drehbar. Die Schaltwelle 20 ist starr mit einem Schaltfinger 22 und in beiden Axialrichtungen davon beabstandeten Auslegeelementen 24 und 26 verbunden oder einteilig ausgebildet. Je nach axialer Stellung greifen der Schaltfinger und die Auslegeelemente in Schaltmäuler 28 von Schaltschienen bzw. Schaltschienen 30 ein, die in Richtung des Doppelpfeils A hin und her verschiebbar sind und mit denen Gänge eines Getriebes ein- und auslegbar sind.

Dargestellt sind vier Schaltschienen 30₁, 30₂, 30₃ und 30₄, wobei die Schaltschienen 30₁ und 30₃ zu einem die ungeraden Gänge enthaltenen Teilgetriebe eines Doppelkupplungs- bzw. Parallelschaltgetriebes gehören und die Schaltschienen 28₂ und 28₄ zu dem die geraden Gänge enthaltenen Teilgetriebe des Parallelschaltgetriebes gehören.

In der Stellung gemäß Figur 3a) befindet sich der Schaltfinger 22 in dem Maul der Schaltschiene 30₁, wohingegen sich das Auslegeelement 24 in dem Maul der Schaltschiene 30₃ befindet. In der Stellung gemäß Figur 3b) ist die Schaltwelle etwas verschoben, so dass sich der Schaltfinger 22 im Maul der Schaltschiene 30₂ befindet und das Auslegeelement 24 im Maul der Schaltschiene 30₄ befindet. In den Figurenteilen c) und d) ist die Schaltwelle jeweils weiter nach unten verschoben, so dass sich der Schaltfinger 22 im Maul der Schaltschiene 30₃ bzw. 30₄ und das Auslegeelement 24 im Maul der Schaltschiene 30₁ bzw. der Schaltschiene 30₂ befindet.

In Figur 4 ist die an sich bekannte Wirkungsweise der an sich bekannten beschriebenen Anordnung erläutert:

Es sei angenommen, die dem Betrachter zugewandte Schaltschiene sei die Schaltschiene 30₄, in deren Maul sich das Auslegeelement 24 befindet, wohingegen die Schaltschiene 30₂, in deren Maul sich der Schaltfinger 22 befindet, nicht dargestellt ist.

Figur 4a zeigt die Anordnung in neutraler Mittelstellung. Die Mäuler der Schaltschienen 30₄ und 30₂ befinden sich in einer Stellung, in der kein Gang eingelegt ist. In der Stellung gemäß Figur 4b wird die Schaltschiene 30₂ vom Schaltfinger 22 zum Schalten eines Gangs nach links verschoben. In der dargestellten Stellung befindet sich die Schaltschiene 30₄ noch in Neutralstellung, d.h. mit ihr ist kein Gang geschaltet. Die Schaltschiene 30₂ dagegen befindet sich in ihrem nach links verschobenen Zustand, d.h. diese Schaltschiene wird in Gangeinlegerichtung verschoben. Wenn die Schaltwelle 20 aus der Stellung gemäß Figur 4b weiter in Uhrzeigerrichtung verdreht wird, werden alle übrigen (nicht dargestellten Schaltschienen vom Auslegeelement 24 nach links, d.h. in die Neutralstellung verschoben, bevor der Schaltfinger 22 die Schaltschiene 30₂ vollständig nach links verschiebt und einen neuen Gang einlegt. Entsprechend wird in Figur 4c durch Drehrichtungsumkehr der Schaltwelle 20 mittels des Schaltfingers 22 dieser Gang wieder ausgelegt. Durch den Eingriff gemäß Figur 4d der äußeren kreiszylindrischen Flächen des Auslegeelements 24 wird die Schaltschiene 30₄ in der Neutralstellung verriegelt bzw. gesperrt, während die nicht dargestellte hintere Schaltschiene 30₂ zum Einlegen eines Gangs nach links verschoben wird.

Insgesamt wird mit der beschriebenen Anordnung erreicht, dass der Schaltfinger aus einer jeweils geschalteten Schaltwelle eines Teilgetriebes in Neutralstellung bewegt werden kann, ohne dass der mit der Schaltwelle geschaltete Gang ausgelegt wird. Wenn ein neuer Gang eingelegt wird, ist jeweils gewährleistet, dass zuvor der bis dahin geschaltete Gang des jeweiligen Teilgetriebes ausgelegt wird. Dies wird, wie dargestellt, dadurch erreicht, dass die Schaltmäuler deutlich breiter sind als der Schaltfinger und dass durch die Umfangsgeometrie der Auslegeelemente und die Umfangsgeometrie der Schaltmäuler gewährleistet wird, dass ein mit einer Schaltschiene geschalteter Gang ausgelegt wird, bevor mit einer anderen Schaltschiene des gleichen Teilgetriebes ein neuer Gang eingelegt wird. Des Weiteren bleibt der in einem Teilgetriebe geschaltete Gang durch einen Schaltvorgang im anderen Teilgetriebe unbeeinflusst.

Die Erfindung macht sich die mit Hilfe des an sich bekannten Interlock Prinzips geschaffene Möglichkeit, den Schaltfinger aus einer Schaltstellung in die Neutralstellung bzw. eine Wählstellung zu bewegen, ohne dass der Gang ausgelegt wird, um zu überprüfen bzw. zu verifizieren, ob der Wählaktor 12 und seine Verbindung mit der Schaltwelle 20 einwandfrei funktioniert.

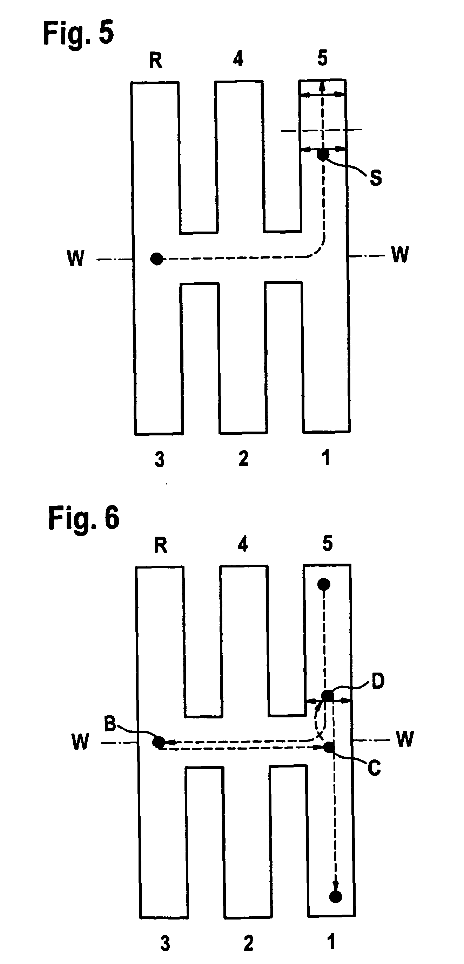

In den Figuren 5 und 6 ist jeweils eine an sich bekannte Schaltkulisse dargestellt, längs der ein mit der Schaltwelle 20 starr verbundenes Führungsglied (nicht dargestellt) in einer waagerechten Wählgasse W-W und den vorzugsweise senkrecht dazu angeordneten Schaltgassen bewegbar ist, wobei die Kulisse derart angeordnet und geformt ist, dass der Bewegung des nicht dargestellten Führungsgliedes längs der Wählgasse eine Bewegung des Schaltfingers 22 senkrecht zur Papierebene gemäß Figur 4a) entspricht und sich der Schaltfinger 22 bei Bewegung längs der Schaltgassen 3-R bzw. 1-5 im Schaltmaul einer der Schaltschienen 30₁ bzw. 30₃ befindet und bei Bewegung längs der Schaltgasse 24 im Schaltmaul einer der Schaltschienen 30₂ bzw. 30₄ befindet.

Bezug nehmend auf Figur 5 sei zunächst angenommen, dass beispielsweise im dritten Gang gefahren wird, so dass sich die zugehörige Schaltschiene in der Stellung befindet, in der der dritte Gang eingelegt ist. Der Schaltfinger kann dann in die Neutralgasse und längs der Neutralgasse bewegt werden. Beim Einlegen des dritten Gangs wurde durch eines der zugehörigen Auslegeelemente sichergestellt, dass sich die den Gängen 1 und 5 zugeordnete Schaltschiene in ihre Neutralstellung bewegt, d.h. dort kein Gang eingelegt ist. Der Schaltfinger kann längs der Wählgasse bewegt werden, ohne dass das Fahren im dritten Gang beeinflusst wird. Wenn von der Getriebesteuerung einer der Gänge 1 und 5 für das Teilgetriebe vorgewählt werden soll, kann die Schaltwelle von den Aktoren 12 und 14 derart bewegt werden, dass sich der Schaltfinger in die Position S bewegt, d.h. in eine Stellung, vor der der eigentliche Schaltvorgang in den 5. Gang einsetzt, beispielsweise vor den Synchronisationspunkt, der strichpunktiert eingezeichnet ist. In der Stellung S kann der Wählaktor erneut aktiviert werden, um durch Anfahren eines der seitlichen Ränder der Schaltgasse festzustellen, ob sich der Schaltfinger tatsächlich in der Schaltgasse 1-5 befindet. Das Anfahren eines der Ränder kann durch einen Anstieg der Stromaufnahme des Wählaktors 12 festgestellt werden. Die Position wird mit Hilfe eines der Wegsensoren 16 bzw. 18 festgestellt, der ein Inkrementsensor sein kann und beispielsweise beim Anfahren eines Endes der Wählgasse auf Null gesetzt wird. Wenn aus der verifizierten Stellung S in den Gang 5 oder auch den Gang 1 geschaltet werden soll, ist sichergestellt, dass sich der Schaltfinger in der richtigen Schaltgasse befindet.

Das beschriebene Verfahren ist nicht auf mit einem Active Interlock System versehene, automatisierte oder automatische Schaltgetriebe beschränkt. Es kann auch bei konventionellen Getrieben durchgeführt werden, wobei bei diesen allerdings der Nachteil besteht, dass während der Verifizierung kein Gang eingelegt ist, so dass ein gewisser Zeitverlust bzw. eine längere Zugkraftunterbrechung entsteht.

Nach einer Verifizierung in der Stellung S der Figur 5 kann unmittelbar ohne nochmalige Betätigung des Wählaktors in den Gang 5 oder den Gang 1 geschaltet werden. Wenn in die Schaltgasse eines anderen Gangs geschaltet werden soll, muss der Wählaktor erneut betätigt werden, wobei die verifizierte Stellung des Wählaktors als Ausgangsstellung dienen kann, von der aus die neue gewünschte Wählstellung angefahren wird, indem, beispielsweise bei Ausbildung des Wählstellungssensors als Inkrementsensor, der Wählaktor betätigt wird, bis sich der Zählstand um ein dem Schaltgassenabstand entsprechendes Maß geändert hat.

Das Erreichen des Synchronpunktes bei der Bewegung des Schaltfingers längs der Schaltgasse kann durch eine erhöhte Stromaufnahme des Schaltaktors 14 (Figur 1) und/oder durch eine Verlangsamung der Geschwindigkeit des Schaltfingers erkannt werden.

Wie in Figur 5 am oberen Ende der Schaltgasse 15 angedeutet, kann bei Erreichen des Schaltgassenendes sowohl eine Verifizierung des Erreichen des Endes der Schaltgasse (Anlaufen eines Endanschlags) als auch eine Verifizierung der Schaltgasse erfolgen, indem durch Betätigung des Wählaktors eine Seitenwand der Schaltgasse angefahren wird.

Figur 6 zeigt ein weiteres Beispiel zur Verifizierung der einwandfreien Funktion des Wählmechanismus:

Sei in Figur 6 zunächst angenommen, dass der 5. Gang eingelegt ist und dass das Getriebe bzw. der Schaltfinger in eine der Schaltgasse R-3 zugeordnete Warteposition B am Ende der Wählgasse bewegt. Sei nun weiter angenommen, dass unter Steuerung des Steuergerätes 10 die nächste Warteposition wiederum der Schaltgasse 1-5 zugeordnet ist. Der Schaltfinger wird dann vom Wählaktor in die Position C bewegt, d.h. die der Schaltgasse 1-5 zugeordnete Position in der Wählgasse. Während der Wartezeit wird eine Verifikation der einwandfreien Funktion des Wählmechanismus durchgeführt, indem der Schaltfinger um ein kleines Maß in den dem 5. Gang zugeordneten Bereich der Schaltgasse 1-5 in die Stellung D bewegt wird und dort durch Aktivieren des Wählaktors eine Verifikation durchgeführt wird. Nach dieser Verifikation ist sichergestellt, dass sich der Schaltfinger in der Schaltgasse 1-5 befindet, so dass bei einem nachfolgenden Schaltbefehl beispielsweise zum Einlegen des ersten Ganges der Schaltfinger unmittelbar in die dem Einlegen des 1. Gangs entsprechende Stellung bewegt werden kann. Wenn nicht der 1. Gang sondern beispielsweise der 3. Gang eingelegt werden soll, wird der Schaltfinger entsprechend über die Position B in die Schaltgasse 3-R bewegt, wobei der Wählaktor in Folge der verifizierten Kenntnis der Lage der Schaltgasse 1-5 entsprechend dem Abstand zwischen den Schaltgassen 3-R und 1-5 angesteuert werden kann.

Anhand der Figur 6 ist unmittelbar ersichtlich, dass folgende Strategie von Vorteil ist:

Wenn die Warteposition in der Wählgasse ist und keine Schaltschiene bewegt wird, wenn der Schaltfinger in Richtung des zu der Wartestellung gehörenden Gangs bewegt wird, wird die zu der Warteposition gehörende Schaltgasse für eine Verifizierung der Funktion des Wählmechanismus verwendet.

Wenn die Warteposition in der Wählgasse ist und keine Schaltschiene bewegt wird, wenn der Schaltfinger in die Gegenrichtung des zu der Wartestellung gehörenden Gangs bewegt wird, dann wird die Schaltgasse für eine Verifizierung verwendet, die zu der zu der Warteposition gehörenden entgegengesetzt ist.

Zusammenfassend wird mit der Erfindung erreicht, dass bei mit einem Active Interlock Mechanismus ausgerüsteten Getrieben, insbesondere Parallelschaltgetrieben, die einwandfreie Funktion des Wählmechanismus bzw. die Position des Schaltfingers in der jeweils richtigen Schaltgasse ohne Zeitverlust verifiziert werden kann, während ein neuer Zielgang noch nicht eingelegt ist. Fehlschaltungen können auf diese Weise sicher vermieden werden. Auch bei nicht mit Active Interlock Systemen versehenen Getrieben ist die Erfindung einsetzbar, indem die Position des Wählaktors bzw. die Position des Schaltfingers in einer bestimmten Schaltgasse durch Anfahren eines Randes der Schaltgasse mit Hilfe der Aktivierung des Wählaktors verifiziert wird, bevor der neue Gang eingelegt wird.

### Bezugszeichenliste

- 10: Steuergerät
- 12: Wählaktor
- 14: Schaltaktor
- 16: Wegsensor
- 18: Wegsensor
- 20: Schaltwelle
- 22: Schaltfinger
- 24: Auslegeelement
- 26: Schaltmaul
- 28: Schaltschiene
- 30: Schaltschiene

## Patentansprüche

1. Verfahren zum Schalten von Gängen eines automatischen Schaltgetriebes, blei welchem Verfahren ein Schaltfinger (22) von einem Wählaktor (12) längs einer Wählgasse in verschiedene Wählstellungen bewegbar ist, von denen aus der Schaltfinger mittels eines Schaltaktors (14) in unterschiedliche Schaltgassen bewegbar ist und der Schaltfinger jeweils einen Gang einlegt, wenn er in einen Endbereich einer Schaltgasse bewegt wird, **dadurch gekennzeichnet, dass** zum Verifizieren der einwandfreien Funktion des Wählaktors (12) und dessen Verbindung mit dem Schaltfinger (22) jeweils vor dem Einlegen eines neuen Gangs der Wählaktor innerhalb einer Schaltgasse zum Verifizieren derart aktiviert wird, dass durch Anfahren eines Randes der Schaltgasse die jeweilige zu verifizierende Schaltgasse erkannt wird.

2. Verfahren nach Anspruch 1, wobei der Schaltfinger (22) nach dem Einlegen eines Ganges in die Wählgasse zurückbewegt wird, ohne dass der eingelegte Gang ausgelegt wird.

3. Verfahren nach Anspruch 1 oder 2, wobei der Wählaktor (12) zum Verifizieren aktiviert wird, wenn der Schaltfinger (22) bei seiner Bewegung längs einer Schaltgasse eine Synchronposition zum Synchronisieren des jeweiligen Ganges erreicht.

4. Verfahren nach Anspruch 2, wobei der Schaltfinger (22) nach dem Einlegen eines Ganges in die Wählgasse bewegt wird und zum Verifizieren in die Schaltgasse eines noch eingelegten Ganges bewegt wird.

5. Vorrichtung zum Schalten von Gängen eines automatischen Schaltgetriebes, enthaltend
einen Wählaktor (12),
einen Schaltaktor (14),
eine mit wenigstens einem Schaltfinger (22) und einem Auslegelement (24, 26) verse hene Schaltwelle (20) und wenigstens zwei Schaltschienen (30), wobei
die Schaltwelle von dem Wählaktor und dem Schaltaktor derart beweglich ist, dass sich der Schaltfinger längs einer Wählgasse in den Schaltschienen zugeordnete Wählpositionen bewegt ist, von denen aus er sich in eine der Schaltgassen bewegt,
der Schaltfinger beim Bewegen aus einer Wählposition längs einer Schaltgasse in deren Endbereich die zugeordnete Schaltschiene zum Einlegen eines Gangs bewegt und das Auslegeelement beim Einlegen des Gangs eine andere Schaltschiene derart bewegt, dass ein dieser zugeordneter Gang ausgelegt wird,
wenigstens einen Sensor (16, 18) zum Erfassen der Stellung des Schaltfingers in Wählrichtung und
eine elektronische Steuereinrichtung (10) zum Steuern des Wählaktors und des Schal taktors entsprechend einem Verfahren nach einem der Ansprüche 1 bis 4.

6. Vorrichtung nach Anspruch 5, wobei das Getriebe ein Parallelschaltgetriebe ist.

## Claims

1. Method for shifting gears of an automatic gear-shift transmission, in which method a shift finger (22) of a selector actuator (12) can be moved along a selector slot into different selector positions from which the shift finger can be moved by means of a shift actuator (14) into different shift slots, and the shift finger engages in each case one gear when moved into an end region of a shift slot, **characterized in that**, to verify correct functioning of the selector actuator (12) and of its connection to the shift finger (22), in each case before the engagement of a new gear, the selector actuator is, for the purpose of verification, activated within a shift slot such that the respective shift slot to be verified is detected by abutment against an edge of the shift slot.

2. Method according to Claim 1, with the shift finger (22) being moved back into the selector slot after the engagement of a gear, without the engaged gear being disengaged.

3. Method according to Claim 1 or 2, with the selector actuator (12) being activated for the purpose of verification when the shift finger (22), during its movement along a shift slot, reaches a synchronizing position for the synchronization of the respective gear.

4. Method according to Claim 2, with the shift finger (22) being moved into the selector slot after the engagement of a gear and, for the purpose of verification, being moved into the shift slot of a gear which is still engaged.

5. Device for shifting gears of an automatic gear-shift transmission, comprising
a selector actuator (12),
a shift actuator (14),
a shift shaft (20), which is provided with at least one shift finger (22) and a disengaging element (24, 26), and at least two shift rails (30),
with it being possible for the shift shaft to be moved by the selector actuator and the shift actuator such that the shift finger is moved along a selector slot into selector positions which are assigned to the shift rails and from which said shift finger is moved into one of the shift slots, with the shift finger, as it moves from a selector position along a shift slot into the end region of said shift slot, moving the associated shift rail so as to engage a gear, and
with the disengaging element, during the engagement of the gear, moving another shift rail such that a gear assigned thereto is disengaged,
at least one sensor (16, 18) for measuring the position of the shift finger in the selector direction, and
an electronic control device (10) for controlling the selector actuator and of the shift actuator corresponding to a method according to one of Claims 1 to 4.

6. Device according to Claim 5, with the transmission being a parallel gear-shift transmission.

## Revendications

1. Procédé pour changer les rapports d'une boîte de vitesses automatique, procédé selon lequel un ergot de changement de rapport (22) peut être déplacé par un actionneur de sélection (12) le long d'une voie de sélection dans différentes positions de sélection depuis lesquelles l'ergot de changement de rapport peut être déplacé dans différentes voies de changement de rapport au moyen d'un actionneur de changement de rapport (14) et l'ergot de changement de rapport engage à chaque fois un rapport lorsqu'il est déplacé dans une zone d'extrémité d'une voie de changement de rapport, **caractérisé en ce que** pour vérifier le bon fonctionnement de l'actionneur de sélection (12) et sa liaison avec l'ergot de changement de rapport (22), l'actionneur de sélection, avant d'engager un nouveau rapport, est à chaque fois activé à l'intérieur d'une voie de changement de rapport en vue de la vérification de telle sorte que la voie de changement de rapport à vérifier correspondante est détectée en atteignant un bord de la voie de changement de rapport.

2. Procédé selon la revendication 1, selon lequel l'ergot de changement de rapport (22), après l'engagement d'un rapport, est déplacé en arrière dans la voie de sélection sans désengager le rapport engagé.

3. Procédé selon la revendication 1 ou 2, selon lequel l'actionneur de sélection (12) est activé en vue de la vérification lorsque l'ergot de changement de rapport (22), lors de son mouvement le long d'une voie de changement de rapport, atteint une position synchrone pour la synchronisation du rapport correspondant.

4. Procédé selon la revendication 2, selon lequel l'ergot de changement de rapport (22), après l'engagement d'un rapport, est déplacé dans la voie de sélection puis déplacé dans la voie de changement de rapport d'un rapport encore engagé en vue de la vérification.

5. Dispositif pour changer les rapports d'une boîte de vitesses automatique, comprenant
un actionneur de sélection (12),
actionneur de changement de rapport (14),
un arbre de changement de rapport (20) muni d'au moins un ergot de changement de rapport (22) et d'un élément en console (24, 26) et d'au moins deux rails de changement de rapport (30), l'arbre de changement de rapport pouvant être déplacé par l'actionneur de sélection et l'actionneur de changement de rapport de telle sorte que l'ergot de changement de rapport se déplace le long d'une voie de sélection dans les positions de sélection associées aux rails de changement de rapport, depuis lesquelles il se déplace dans l'une des voies de changement de rapport,
l'ergot de changement de rapport, lorsqu'il est déplacé depuis une position de sélection le long d'une voie de changement de rapport dans la zone d'extrémité de celle-ci, déplace le rail de changement de rapport correspondant en vue d'engager un rapport et l'élément en console, lors de l'engagement du rapport, déplace un autre rail de changement de rapport de telle sorte qu'un rapport qui lui est associé soit désengagé,
au moins un capteur (16, 18) pour détecter la position de l'ergot de changement de rapport dans le sens de la sélection et
un dispositif de commande électronique (10) pour commander l'actionneur de sélection et l'actionneur de changement de rapport conformément à un procédé selon l'une des revendications 1 à 4.

6. Dispositif selon la revendication 5, la boîte de vitesses étant une boîte de vitesses parallèle.
